(19) Europäisches Patentamt

European Patent Office

Office européen des brevets

(11) **EP 1 004 622 B1**

(12) **EUROPÄISCHE PATENTSCHRIFT**

(45) Veröffentlichungstag und Bekanntmachung des Hinweises auf die Patenterteilung:
**04.09.2002 Patentblatt 2002/36**

(51) Int Cl.⁷: **C08K 5/14**, C08L 83/04

(21) Anmeldenummer: **99120935.4**

(22) Anmeldetag: **02.11.1999**

(54) **Kombinationsvernetzer für drucklose Vulkanisation von Siliconkautschuk**

Mixture of curing agents for pressureless curing of silicone rubber

Mélange d'agents de réticulation pour le durcissement sans pression de caoutchouc de silicone

(84) Benannte Vertragsstaaten:
**AT BE CH CY DE DK ES FI FR GB GR IE IT LI LU MC NL PT SE**

(30) Priorität: **19.11.1998 DE 19853488**
**11.02.1999 DE 19905767**

(43) Veröffentlichungstag der Anmeldung:
**31.05.2000 Patentblatt 2000/22**

(73) Patentinhaber: **Wacker-Chemie GmbH**
**81737 München (DE)**

(72) Erfinder: **Wolfer, Dietrich, Dr.**
**5110 Oberndorf (AT)**

(74) Vertreter: **Fritz, Helmut, Dr. et al**
**Wacker-Chemie GmbH,**
**Zentralabteilung Patente,**
**Marken und Lizenzen,**
**Hanns-Seidel-Platz 4**
**81737 München (DE)**

(56) Entgegenhaltungen:
EP-A- 0 109 508     US-A- 4 260 536
US-A- 4 743 671     US-A- 5 120 385

• **PATENT ABSTRACTS OF JAPAN vol. 1999, no. 08, 30. Juni 1999 (1999-06-30) & JP 11 060779 A (ARAI PUMP MFG CO LTD), 5. März 1999 (1999-03-05)**

**Beschreibung**

Die Erfindung betrifft Organopolysiloxanmassen und ein Verfahren zur Herstellung derselben.

Für die drucklose Vernetzung von Siliconkautschuk-Extrudaten kommen derzeit nur 2,4-Dichlorbenzoylperoxid (US 4,260,536) und Paramethylbenzylperoxid in Frage. Beide Peroxide haben Nachteile. So bildet 2,4-Dichlorbenzoylperoxid teilweise toxische Spaltprodukte und Paramethylbenzylperoxid führt zu einer starken Geruchsbelästigung, die Vulkanisationsgeschwindigkeit ist langsam und transparente Vulkanisate können eine leichte Gelbfärbung aufweisen.

Aufgabe der Erfindung ist es, die Nachteile des Standes der Technik zu überwinden, insbesonders eine schnelle Vernetzung ohne Geruchsbelästigung und Gelbfärbung zu erreichen.

Die Aufgabe wird durch die Erfindung gelöst.

Ein Gegenstand der Erfindung sind Organopolysiloxanmassen herstellbar auf der Grundlage von einem Organopolysiloxan und einem Vernetzer enthaltend Bis - 4 - Methylbenzoylperoxid (= PMBP) und eine einzige Verbindung oder mindestens zwei der Verbindungen aus der Gruppe, die aus Benzoylperoxid, Dicumylperoxid, 2,5 - Dimethyl-hexan - 2,5 - di-tertiär-butylperoxid (=DHBP), Ditertiär-butylperoxid besteht, im Gewichtsverhältnis von 1:0,3 bis 1:1.

Als Organopolysiloxane können alle peroxidisch vernetzbaren Organopolysiloxane verwendet werden, vorzugsweise Organopolysiloxane (A) aus Einheiten der allgemeinen Formel

$$\frac{R_rSiO_{4-r}}{2} \qquad (I),$$

worin

R gleich oder verschieden sein kann und gegebenenfalls substituierter Kohlenwasserstoffrest bedeutet und

r 0, 1, 2 oder 3 ist und einen durchschnittlichen Zahlenwert von 1,9 bis 2,1 hat.

Beispiele für Kohlenwasserstoffreste R sind Alkylreste, wie der Methyl-, Ethyl-, n-Propyl-, iso-Propyl-, n-Butyl-, iso-Butyl-, tert.-Butyl-, n-Pentyl-, iso-Pentyl-, neo-Pentyl-, tert.-Pentylrest, Hexylreste, wie der n-Hexylrest, Heptylreste, wie der n-Heptylrest, Octylreste, wie der n-Octylrest und iso-Octylreste, wie der 2,2,4-Trimethylpentylrest, Nonylreste, wie der n-Nonylrest, Decylreste, wie der n-Decylrest, Dodecylreste, wie der n-Dodecylrest, Octadecylreste, wie der n-Octadecylrest; Cycloalkylreste, wie Cyclopentyl-, Cyclohexyl-, Cycloheptylreste und Methylcyclohexylreste; Arylreste, wie der Phenyl-, Biphenyl-, Naphtyl- und Anthryl-und Phenanthrylrest; Alkarylreste, wie o-, m-, p-Tolylreste, Xylylreste und Ethylphenylreste; Aralkylreste, wie der Benzylrest, der α- und der β-Phenylethylrest.

Beispiele für substituierte Kohlenwasserstoffreste R sind halogenierte Alkylreste, wie der 3-Chlorpropyl-, der 3,3,3-Trifluorpropyl- und der Perfluorhexylethylrest, halogenierte Arylreste, wie der p-Chlorphenyl- und der p-Chlorbenzylrest.

Bevorzugt handelt es sich bei Rest R um Wasserstoffatom und Kohlenwasserstoffreste mit 1 bis 8 Kohlenstoffatomen, besonders bevorzugt um den Methylrest.

Weitere Beispiele für Reste R sind der Vinyl-, Allyl-, Methallyl-, 1-Propenyl-, 1-Butenyl-, 1-Pentenylrest, 5-Hexenyl-, Butadienyl-, Hexadienyl-, Cyclopentenyl-, Cyclopentadienyl-, Cyclohexenyl-, Ethinyl-, Propargyl- und 1-Propinylrest.

Bevorzugt handelt es sich bei Rest R um Alkenylreste mit 2 bis 8 Kohlenstoffatomen, besonders bevorzugt um den Vinylrest.

Bei gegebenenfalls substituierten Kohlenwasserstoffresten mit 1 bis 8 Kohlenstoffatomen sind der Methyl-, Vinyl-, Phenyl- und 3,3,3-Trifluorpropylrest besonders bevorzugt.

Vorzugsweise sind an mindestens 70 Mol% der in dem Organopolysiloxan (A) aus Einheiten der Formel (I) enthaltenen Si-Atome Alkylreste, insbesondere Methylreste, gebunden. Enthalten die Organopolysiloxane neben Si-gebundenen Methylund/oder 3,3,3-Trifluorpropylresten noch Si-gebundene Vinylund/oder Phenylreste, so handelt es sich bei letzteren bevorzugt um Mengen von 0,001 - 30 Mol%.

Vorzugsweise bestehen die Organopolysiloxane (A) überwiegend aus Diorganosiloxaneinheiten. Die Endgruppen der Organopolysiloxane können Trialkylsiloxygruppen, insbesondere der Trimethylsiloxyrest oder der Dimethylvinylsiloxyrest, sein; es können aber auch ein oder mehrere dieser Alkylgruppen durch Hydroxygruppen oder Alkoxygruppen, wie Methoxy- oder Ethoxyreste, ersetzt sein.

Bei den Organopolysiloxanen (A) kann es sich um Flüssigkeiten oder hochviskose Substanzen handeln. Vorzugsweise weisen die Organopolysiloxane (A) bei 25°C eine Viskosität zwischen $10^3$ und $10^8$ mm$^2$/s auf.

Als Vernetzer wird ein Gemisch aus Bis - 4-Methylbenzoylperoxid (= PMBP) und einer einzige Verbindung oder mindestens zwei der Verbindungen aus der Gruppe, die aus Benzoylperoxid, Dicumylperoxid, 2,5 Dimethyl-hexan - 2,5 - di-tertiär-butylperoxid (=DHBP), Ditertiär-butylperoxid besteht, im Gewichtsverhältnis 1 : 0,3 bis 1 : 1, bevorzugt im Verhältnis 1 : 0,8 verwendet. Falls mindesten zwei Verbindungen aus der Gruppe, die aus Benzoylperoxid, Dicumylperoxid, 2,5 Dimethyl-hexan - 2,5 - di-tertiär-butylperoxid (=DHBP), Ditertiär-butylperoxid besteht, verwendet werden, können diese in beliebigen Mischungsverhältnissen im Rahmen des zuerst genannten Gewichtsverhältnis verwendet werden. Bevorzugt sind in diesem Fall jedoch gewichtsgleichteilige Mischungen der Verbindungen aus der Gruppe, die aus Benzoylperoxid, Dicumylperoxid, 2,5 Dimethyl-hexan - 2,5 - di-tertiär-butylperoxid (=DHBP), Ditertiär-butylperoxid besteht, wobei Mischungen aus Benzoylperoxid und 2,5 Dimethyl-hexan - 2,5-di-tertiär-butylperoxid (=DHBP) im Gewichtsverhältnis von 1 : 1 besonders bevorzugt sind.

Des weiteren enthalten die erfindungsgemäßen Organopolysiloxane (A) vorzugsweise verstärkende und/oder nichtverstärkende Füllstoffe.

Beispiele für verstärkende Füllstoffe sind pyrogene oder gefällte Kieselsäuren mit BET-Oberflächen von mindestens 50 m$^2$/g.

Die genannten Kieselsäurefüllstoffe können hydrophilen Charakter haben oder nach bekannten Verfahren hydrophobiert sein. Hierzu sei beispielsweise auf DE 38 39 900 A (Wacker-Chemie GmbH; angemeldet am 25.11.1988) bzw. die entsprechende US-A 5,057,151 verwiesen. Im allgemeinen erfolgt dann die Hydrophobierung mit 1 bis 20 Gew.-% Hexamethyldisilazan und/oder Divinyltetramethyldisilazan und 0,5 bis 5 Gew.-% Wasser, jeweils bezogen auf das Gesamtgewicht der Organopolysiloxanmasse, wobei diese Reagenzien vorteilhafterweise in einer geeigneten Mischvorrichtung, wie z.B. Kneter oder Innenmischer, zum bereits vorgelegten Organopolysiloxan (A) gegeben werden, bevor die hydrophile Kieselsäure sukzessive in die Masse eingearbeitet wird.

Beispiele für nichtverstärkende Füllstoffe sind Quarzmehl, Diatomeenerde, Calciumsilikat, Zirkoniumsilicat, Zeolithe, Metalloxidpulver, wie Aluminium-, Titan-, Eisen- oder Zinkoxid, Bariumsilikat, Bariumsulfat, Calciumcarbonat, Gips sowie Kunststoffpulver, wie Polyacrylnitrilpulver oder Polytetrafluorethylenpulver. Des weiteren können als Füllstoffe faserige Komponenten, wie Glasfasern und Kunststoffasern, eingesetzt werden. Die BET-Oberfläche dieser Füllstoffe liegt vorzugsweise unter 50 m$^2$/g.

Die erfindungsgemäßen, zu Elastomeren vernetzbaren Organopolysiloxanmassen enthalten Füllstoff (B) in Mengen von vorzugsweise 1 bis 200 Gewichtsteilen, besonders bevorzugt 30 bis 100 Gewichtsteilen, jeweils bezogen-auf 100 Gewichtsteile Organopolysiloxan (A).

Der jeweiligen Anwendung entsprechend können den erfindungsgemäßen zu Elastomeren vulkanisierbaren Organopolysiloxanmassen Additive (C), wie beispielsweise Verarbeitungshilfsmittel, wie etwa Weichmacher, Pigmente und Stabilisatoren, wie etwa Hitzestabilisatoren, zugesetzt werden.

Beispiele für Weichmacher, die als Additive (C) eingesetzt werden können, sind mit Trimethylsilylgruppen oder Hydroxygruppen terminierte Polydimethylsiloxane mit einer Viskosität von maximal 1000 mm$^2$/s bei 25°C oder auch Diphenylsilandiol.

Beispiele für Hitzestabilisatoren, die als Additive (C) eingesetzt werden können, sind Übergangsmetallfettsäuresalze, wie Eisenoctoat, Übergangsmetallsilanolate, wie Eisensilanolat, sowie Cer(IV)-Verbindungen.

Darüber hinaus enthalten die erfindungsgemäßen Massen, außer Farbpigmenten, vorzugsweise keine weiteren Stoffe.

Bei den jeweiligen zur Herstellung der erfindungsgemäßen Massen eingesetzten Komponenten kann es sich jeweils um eine einzelne Art einer solchen Komponente, wie auch um ein Gemisch aus mindestens zwei verschiedenen Arten einer solchen Komponente handeln.

Ein weiterer Gegenstand der Erfindung ist ein Verfahren zur Herstellung von Organopolysiloxanmassen, dadurch gekennzeichnet, daß ein Organopolysiloxan und ein Vernetzer enthaltend Bis - 4 - Methylbenzoylperoxid (= PMBP) und eine einzige Verbindung oder mindestens zwei der Verbindungen aus der Gruppe, die aus Benzoylperoxid, Dicumylperoxid, 2,5 Dimethyl-hexan - 2,5 - di-tertiär-butylperoxid (=DHBP), Ditertiär-butylperoxid besteht, im Verhältnis 1 : 0,3 bis 1 : 1 vermischt werden.

Das Organopolysiloxan ist vorzugsweise Organopolysiloxan (A), das dieselbe Bedeutung wie oben hat.

Die Herstellung der erfindungsgemäßen peroxidisch vernetzbaren Organopolysiloxanmassen kann nach bekannten Verfahren erfolgen, wie beispielsweise durch einfaches Mischen der einzelnen Komponenten. Die Einarbeitung der erfindungsgemäß eingesetzten niedermolekularen Organosiliciumverbindungen kann dabei auf verschiedenen Wegen des Zumischens erfolgen, z.B. in einem beliebigen Schritt des Mischens der einzelnen Komponenten der Silikonkautschukmasse. Vorteilhafterweise werden zur Bereitung der erfindungsgemäßen peroxidisch vernetzbaren Massen die niedermolekularen Organosiliciumverbindungen während der Einarbeitung des Füllstoffes in die Masse eingemischt. Eine andere Möglichkeit ist das Aufbringen der erfindungsgemäß eingesetzten niedermolekularen Organosiliciumverbindung auf den Füllstoff durch Mischen in einem Pulvermischer oder durch Mischen in einer Suspension von Füllstoff, inertem organischen Lösungsmittel und niedermolekularer Organosiliciumverbindung und anschließendem Abziehen des organischen Lösungsmittels bis zur Trocknung, um mit diesem anschließend, gleichermaßen mit dem Füllstoff als Träger, eingebracht zu werden. Eine weitere Möglichkeit besteht darin, daß die erfindungsgemäß eingesetzte niedermolekulare Organosiliciumverbindung durch chemische Reaktion, beispielsweise analog der oben beschriebenen Verfahrensvariante 2, auf dem'Füllstoff erzeugt und auf diesem belassen wird.

Die erfindungsgemäßen peroxidisch vernetzbaren Massen können bei den gleichen Bedingungen vernetzen gelassen werden wie die bisher bekannten peroxidisch vernetzbaren Massen.

Die erfindungsgemäßen peroxidisch vernetzbaren Massen haben den Vorteil, daß die daraus hergestellten Elastomere sehr gute mechanische Eigenschaften, insbesondere in Bezug auf den Weiterreißwiderstand zeigen. Des weiteren zeigen sie keine Gelbfärbung und führen nicht zur Geruchsbelästigung.

Die erfindungsgemäßen Organopolysiloxanmassen sowie die erfindungsgemäß daraus hergestellten Elastomere können für alle Zwecke eingesetzt werden, für die auch bisher zu Elastomeren vernetzbare Organopolysiloxanmassen bzw. Elastomere verwendet wurden. Insbesondere eignen sich die erfindungsgemäßen Organopolysiloxanmassen sowie die erfindungsgemäß daraus hergestellten Elastomere für Anwendungen, die einen verbesserten Weiterreißwiderstand erfordern, wie z.B. Schläuche, Kabelummantelungen, Kraftfahrzeugteile und Dichtungen.

### Beispiel 1

100 Teile eines durch Trimethylsiloxygruppen endblockierten Diorganopolysiloxans aus 99,93 Molprozent Dimethylsiloxaneinheiten und 0,07 Molprozent Vinylmethylsiloxaneinheiten mit einer Viskosität von $8 \cdot 10^6$ mPa·s bei 25°C werden in einem bei 150°C betriebenen Kneter zunächst mit 50 Teilen pyrogen in der Gasphase erzeugtem Siliciumdioxyd mit einer Oberfläche von 200 m$^2$/g, dann mit 1 Teil durch Trimethylsiloxygruppen endblockierten Dimethylpolysiloxan mit einer Viskosität von 96 mPa·s bei 25°C, dann mit 7 Teilen eines in den endständigen Einheiten je eine Si-gebundene Hydroxylgruppe aufweisenden Dimethylpolysiloxans mit einer Viskosität von 40 mPa·s bei 25°C gemischt. Zur Vernetzung wird ein Gemisch von 1 Gew% Bis - 4-Methylbenzoylperoxid (= PMBP) und 0,8 Gew.% Benzoylperoxid eingemischt.

### Beispiel 2

100 Teile eines durch Trimethylsiloxygruppen endblockierten Diorganopolysiloxans aus 99,93 Molprozent Dimethylsiloxaneinheiten und 0,07 Molprozent Vinylmethylsiloxaneinheiten mit einer Viskosität von $8 \cdot 10^6$ mPa·s bei 25°C werden in einem bei 150°C betriebenen Kneter zunächst mit 50 Teilen pyrogen in der Gasphase erzeugtem Siliciumdioxyd mit einer Oberfläche von 200 m$^2$/g, dann mit 1 Teil durch Trimethylsiloxygruppen endblockierten Dimethylpolysiloxan mit einer Viskosität von 96 mPa's bei 25°C, dann mit 7 Teilen eines in den endständigen Einheiten je eine Si-gebundene Hydroxylgruppe aufweisenden Dimethylpolysiloxans mit einer Viskosität von 40 mPa·s bei 25°C wird zur Vernetzung ein Gemisch von 1 Gew.% Bis - 4 - Methylbenzoylperoxid (= PMBP) und 0,8 Gew.% einer gleichteiligen Mischung aus Benzoylperoxid und 2,5 Dimethyl-hexan - 2,5 - di-tertiär-butylperoxid (=DHBP) eingemischt.

### Vergleichsbeispiel 1

Die in Beispiel 1 und 2 beschriebene Arbeitsweise wird wiederholt mit der Abänderung, daß als Vernetzer nur 1,5 Gew.% PMBP eingemischt wird.

### Vergleichsbeispiel 2

Die in Beispiel 1 beschriebene Arbeitsweise wird wiederholt mit der Abänderung, daß als Vernetzer nur eine 1,5 Gew.% Benzoylperoxid eingemischt wird.

### Vergleichsbeispiel 3

Die in Beispiel 2 beschriebene Arbeitsweise wird wiederholt mit der Abänderung, daß als Vernetzer nur eine Mischung aus 1,5 Gew.% Benzoylperoxid und 2,5 Dimethyl-hexan - 2,5 - di-tertiär-butylperoxid (=DHBP) eingemischt wird.

Mit der Masse gemäß Beispiel 1 und 2, und den Vergleichsmischungen 1, 2 und 3 wird ein elektrischer Leiter (Litze 1,5 mm$^2$) mit Hilfe einer Extrusion isoliert. Die Wandstärke der Isolierung beträgt 0,6 mm. Es wird ein Extruder mit Schnecke 45/10 d mit Querspritzkopf dafür verwendet. Die Temperatur des Heizkanals beträgt am Eingang 470 °C, in der Mitte 350 °C und am Ende 250 °C. Die Abzugsgeschwindigkeit beträgt 20 m/min. Die Verweilzeit im Heizkanal beträgt 20 sec.

### Ergebnis:

### Kabel nach Beispiel 1 und 2:

Blasenfrei, voll vernetzte Isolation, nur geringe Geruchsbelästigung, vernachlässigbare Gelbfärbung der Isolation.

### Kabel nach Vergleichsbeispiel 1:

Leicht untervernetzte Isolation, teilweise leichte Blasenbildung, starke Geruchsbelästigung, Gelbfärbung der Isolation. Für eine ausreichende Vernetzung ist eine Verlängerung der Verweilzeit auf 25 sec. erforderlich.

### Kabel nach Vergleichsbeispiel 2 und 3:

Isolation mit Blasenbildung, klebrige-Oberfläche, keine Geruchsbelästigung, keine Gelbfärbung.

### Patentansprüche

1. Organopolysiloxanmassen herstellbar auf der Grundlage von einem Organopolysiloxan und einem Vernetzer enthaltend Bis-4 - Methylbenzoylperoxid (= PMBP) und eine einzige Verbindung oder mindestens zwei der Verbindungen aus der Gruppe, die aus Benzoylperoxid, Dicumylperoxid, 2,5 Dimethyl-hexan - 2,5 - di-tertiär-butylperoxid (=DHBP), Ditertiär-butylperoxid besteht, wobei

der Vernetzer enthaltend Bis - 4-Methylbenzoylperoxid (= PMBP) und eine einzige Verbindung oder mindestens zwei der Verbindungen aus der Gruppe, die aus Benzoylperoxid, Dicumylperoxid, 2,5 Dimethyl-hexen - 2,5 - di-tertiär-butylperoxid (=DHBP), Ditertiär-butylperoxid besteht, im Gewichtsverhältnis 1 : 0,3 bis 1 : 1 enthalten ist.

2.  Verfahren zur Herstellung von Organopolysiloxanmassen, **dadurch gekennzeichnet, daß** ein Organopolysiloxan und ein Vernetzer enthaltend Bis - 4 - Methylbenzoylperoxid - (= PMBP) und eine einzige Verbindung oder mindestens zwei der Verbindungen aus der Gruppe, die aus Benzoylperoxid, Dicumylperoxid, 2,5 Dimethyl-hexan - 2,5 - di-tertiär-butylperoxid (=DHBP), Ditertiär-butylperoxid besteht, vermischt werden, wobei der Vernetzer enthaltend Bis - 4 - Methylbenzoylperoxid (= PMBP) und eine einzige Verbindung oder mindestens zwei der Verbindungen aus der Gruppe, die aus Benzoylperoxid, Dicumylperoxid, 2,5 Dimethyl-hexan - 2,5 - di-tertiär-butylperoxid (=DHBP), Ditertiär-butylperoxid besteht, im Gewichtsverhältnis 1 : 0,3 bis 1 : 1 zugemischt werden.

**Claims**

1.  Organopolysiloxane composition which can be prepared on the basis of an organopolysiloxane and a crosslinking agent comprising bis-4-methylbenzoyl peroxide (= PMBP) and a single compound or at least two of the compounds from the group consisting of benzoyl peroxide, dicumyl peroxide, 2,5-dimethyl-hexane-2,5-di-tert-butyl peroxide (=DHBP) and di-tert-butyl peroxide, wherein the crosslinking agent comprising bis-4-methylbenzoyl peroxide (=PMBP) and a single compound or at least two of the compounds from the group consisting of benzoyl peroxide, dicumyl peroxide, 2,5-dimethyl-hexane-2,5-di-tert-butyl peroxide (=DHBP) and di-tert-butyl peroxide is present in a weight ratio of 1:0.3 to 1:1.

2.  Process for the preparation of an organopolysiloxane composition, **characterized in that** it comprises mixing an organopolysiloxane and a crosslinking agent comprising bis-4-methylbenzoyl peroxide (=PMBP) and a single compound or at least two of the compounds from the group consisting of benzoyl peroxide, dicumyl peroxide, 2,5-dimethyl-hexane-2,5-di-tert-butyl peroxide (=DHBP) and di-tert-butyl peroxide, wherein the crosslinking agent comprising bis-4-methylbenzoyl peroxide (=PMBP) and a single compound or at least two of the compounds from the group consisting of benzoyl peroxide, dicumyl peroxide, 2,5-dimethyl-hexane-2,5-di-tert-butyl peroxide (=DHBP) and di-tert-butyl peroxide are added in a weight ratio of 1:0.3 to 1:1.

**Revendications**

1.  Matières à base d'organopolysiloxane, pouvant être préparées à base d'un organopolysiloxane et d'un agent de réticulation contenant du peroxyde de bis-4-méthylbenzoyle (= PMBP) et un seul composé ou au moins deux des composés choisi(s) dans le groupe constitué par le peroxyde de benzoyle, le peroxyde de dicumyle, le peroxyde de 2,5-diméthylhexane-2,5-di-tert-butyle (= DHBP), le peroxyde de di-tert-butyle, l'agent de réticulation contenant du peroxyde de bis-4-méthylbenzoyle (= PMBP) et un seul composé ou au moins deux des composés choisi(s) dans le groupe constitué par le peroxyde de benzoyle, le peroxyde de dicumyle, le peroxyde de 2,5-diméthylhexane-2,5-di-tert-butyle (= DHBP), le peroxyde de di-tert-butyle, en un rapport pondéral de 1:0,3 à 1:1.

2.  Procédé pour la préparation de matières à base d'organopolysiloxane, **caractérisé en ce qu'**on mélange un organopolysiloxane et un agent de réticulation contenant du peroxyde de bis-4-méthylbenzoyle (= PMBP) et un seul composé ou au moins deux des composés choisi(s) dans le groupe constitué par le peroxyde de benzoyle, le peroxyde de dicumyle, le peroxyde de 2,5-diméthylhexane-2,5-di-tert-butyle (= DHBP), le peroxyde de di-tert-butyle, l'agent de réticulation contenant du peroxyde de bis-4-méthylbenzoyle (= PMBP) et un seul composé ou au moins deux des composés choisi (s) dans le groupe constitué par le peroxyde de benzoyle, le peroxyde de dicumyle, le peroxyde de 2,5-diméthylhexane-2,5-di-tert-butyle (= DHBP), le peroxyde de di-tert-butyle, en un rapport pondéral de 1:0,3 à 1:1.